# FASCICULE DE BREVET EUROPEEN

(11) **EP 2 901 057 B1**
(45) Date de publication et mention de la délivrance du brevet: **21.03.2018**
(21) Numéro de dépôt: 13792755.4
(22) Date de dépôt: 30.09.2013
(51) Int. Cl.: F16K 24/04

(54) **CLAPET DE VENTILATION POUR RÉSERVOIR À LIQUIDE INTÉGRANT UNE SÉCURITÉ ANTI-SURPRESSION**
ENTLÜFTUNGSVENTIL FÜR FLÜSSIGKEITSTANK MIT ÜBERDRUCKSCHUTZSICHERHEITSMERKMAL
VENT VALVE FOR LIQUID TANK INCORPORATING ANTI-OVERPRESSURE SAFETY FEATURE

(30) Priorité: 28.09.2012 FR 1259241
(43) Date de publication de la demande: 05.08.2015
(73) Titulaire: Plastic Omnium Advanced Innovation and Research, 1120 Bruxelles (BE)
(72) Inventeur: GANACHAUD, Patrick, F-53000 Laval (FR); STIERS, Emmanuel, F-60490 Vandelicourt (FR); ROUXEL, Thierry, F-53210 Argentre (FR)
(74) Mandataire: de la Bigne, Guillaume Michel Marie
(86) Numéro de dépôt international: PCT/IB2013/059013
(87) Numéro de publication internationale: WO 2014/049584

(56) Documents cités:
- FR-A1- 2 766 134
- FR-A1- 2 766 134
- FR-A1- 2 896 568
- FR-A1- 2 896 568
- US-A- 5 582 198
- US-A- 5 582 198
- US-A- 5 666 989
- US-A- 5 666 989
- US-A1- 2003 062 083
- US-A1- 2003 062 083
- US-A1- 2010 282 335
- US-A1- 2010 282 335

## Description

La présente invention se rapporte à un système de ventilation de réservoir à liquide, en particulier d'un réservoir à carburant pouvant équiper un véhicule automobile.

Les réservoirs à liquide, lorsqu'ils sont susceptibles d'être déplacés avec le liquide qu'ils contiennent, sont généralement équipés d'un système de ventilation, également dénommé circuit ou système de mise à l'air. Ce circuit permet l'introduction d'air dans le réservoir en cas de dépression (notamment pour compenser le volume de liquide consommé) et l'évacuation des gaz contenus dans le réservoir en cas de surpression. On garantit ainsi la sécurité par rapport à l'environnement lorsque le réservoir est soumis à des sollicitations diverses : mouvements en tous sens et de toute amplitude, sollicitations thermiques, dépressions et surpressions. Ce circuit permet également de collecter les gaz devant être rejetés dans l'atmosphère pour, dans certains cas, en retirer les composants les plus polluants, en vue de satisfaire les exigences environnementales en la matière, dont la sévérité augmente régulièrement.

Les contraintes auxquelles doit répondre le circuit de mise à l'air sont particulièrement sévères dans le cas de réservoirs à carburant montés sur des véhicules automobiles. Il est dans ce cas impératif d'empêcher la sortie de carburant liquide, tout en laissant échapper du gaz, afin de gérer les changements importants de pression et de volume de gaz au cours du ravitaillement du réservoir en carburant et pendant la totalité de la durée du stockage dans le réservoir, y compris durant le roulage du véhicule.

Des solutions ont été développées pour répondre à ces contraintes, qui mettent en oeuvre un système de ventilation intégrant notamment un clapet de sécurité plongeant dans le réservoir et dont une partie supérieure traverse une paroi supérieure du réservoir. Alternativement, le clapet peut être disposé intégralement à l'intérieur du réservoir. Un tel clapet est généralement raccordé à un conduit permettant d'évacuer les gaz vers l'atmosphère. Pour certaines applications, un boîtier appelé, canister, est interposé entre le clapet et l'atmosphère, le canister contenant une substance adsorbant les vapeurs de carburant présentes dans les gaz en provenance du réservoir.

Le système de ventilation peut en outre comporter un ou plusieurs dispositifs pour assurer des fonctions telles que l'interdiction de sur-remplissage lors du ravitaillement en carburant (fonction couramment désignée par l'acronyme « ISR » ou « OFP » pour « Over Filing prévention »), une fonction « by-pass » permettant l'introduction d'air à l'intérieur du réservoir en cas de dépression (notamment lorsque du carburant est consommé), ou encore la fermeture automatique du système de ventilation en cas de retournement du véhicule (fonction couramment désignée par l'acronyme « ROV » pour « Roll-Over-Valve »).

Le système de ventilation peut également intégrer une sécurité anti-surpression, assurant, parallèlement aux autres fonctions (et en particulier en parallèle de la fonction de mise à l'air) une fonction couramment dénommée « OPR » (pour « Over-pressure release »). Cette sécurité est conventionnellement assurée par un clapet disposé à l'extérieur du réservoir, au niveau d'une canalisation de respiration des vapeurs qui relie le ciel du réservoir à une zone de la tubulure de remplissage du réservoir. Cette sécurité doit pouvoir fonctionner lorsque le système de mise à l'air du réservoir est fermé (que ce soit en position normale du réservoir ou en position retournée, lors d'un accident).

D'une manière générale, les progrès accomplis dans le domaine des systèmes de ventilation ont conduit à multiplier les fonctions que ces systèmes peuvent mettre en oeuvre, et donc à la multiplication du nombre et à l'augmentation de la complexité des éléments les constituant. De plus, les divers éléments d'un système de ventilation sont en général reliés entre eux (et, lorsqu'il est prévu, avec le canister) via des tubulures, ce qui augmente les difficultés et le coût d'assemblage ainsi que les risques de mauvais fonctionnement (fuites, canalisation bouchées, etc.)

Des solutions ont été envisagées pour tenter de faciliter les opérations d'assemblage sur un réservoir en regroupant au maximum les fonctions assurées par le système de ventilation. Ces regroupements nécessitent généralement l'emploi de tubulures et de raccords.

Le document US 2010/282335 qui sert de base à la présentation en deux parties de la revendication 1, propose ainsi des flotteurs pouvant réaliser une fonction « ROV » en empêchant le déversement de carburant présent dans le réservoir en cas de retournement.

En outre, les documents FR 2 896 568, US 2003/062083, US 5 582 198, US 5 666 989 et FR 2 766 134 présentent des fonctions « ISR », « by-pass », « ROV » ou « OPR » appartenant à l'état de la technique.

La présente invention vise à améliorer les systèmes de ventilation connus en proposant un clapet de ventilation permettant de limiter au maximum le nombre d'éléments à assembler sur le réservoir, et de réduire les risques d'erreurs de montage ainsi que la quantité de canalisations et de raccordements nécessaires à son bon fonctionnement.

Ainsi, l'invention concerne un clapet de mise à l'air pour réservoir à liquide comportant une enceinte dans laquelle sont intégrés :
- des moyens pour assurer une fonction de fermeture automatique du clapet en cas de retournement du réservoir, ci-après désignée fonction « ROV » ;
- des moyens pour assurer une fonction d'interdiction du remplissage du réservoir au-delà d'un niveau prédéterminé, ci-après désignée fonction « ISR » ;
- des moyens pour permettre de libérer la pression dans le réservoir vers l'atmosphère extérieure en cas de surpression excédant un seuil prédéterminé, ci-après désignée fonction « OPR » ;
- des moyens pour autoriser l'entrée d'air dans le réservoir lorsque la pression régnant au sein du réservoir est inférieure à la pression atmosphérique, ci-après désignée fonction « by-pass » ; caractérisé en ce que ladite fonction « OPR » étant apte à fonctionner lorsque la fonction « ROV » ferme le clapet.

Ainsi, grâce à l'invention, l'implémentation du système de ventilation sur un réservoir se limite au montage d'un clapet tel que défini ci-dessus, soit un élément unique, intégré, et facile à monter. Le clapet conforme à l'invention intègre la quasi-totalité des fonctions que doit assurer le système de ventilation d'un réservoir, en particulier d'un réservoir à carburant pour véhicule automobile. Bien entendu, le clapet selon l'invention est configuré de telle sorte que la fonction « OPR » puisse être mise en oeuvre même lorsque le système de mise à l'air est fermé, tandis que les fonctions ISR et By-pass ne peuvent être mises en oeuvre que lorsque le système de mise à l'air est ouvert.

Dans une réalisation, l'enceinte comprend une chambre supérieure communiquant avec l'atmosphère extérieure, une chambre inférieure communiquant avec l'intérieur du réservoir et une chambre intermédiaire séparant la chambre supérieure et la chambre inférieure.

Dans une réalisation, les moyens pour assurer la fonction « OPR » comprennent un orifice « OPR », normalement obturé par un élément d'obturation tel qu'une bille, l'élément de fermeture étant soumis à l'action de moyens élastiques tels qu'un ressort.

Dans une réalisation, l'orifice « OPR » met en communication la chambre inférieure et la chambre supérieure.

Dans une réalisation, l'orifice « OPR » met en communication la chambre inférieure et la chambre intermédiaire.

Dans une réalisation, les moyens pour assurer la fonction « ROV » comprennent un flotteur apte à obturer un orifice « ROV » mettant en communication la chambre inférieure et la chambre intermédiaire.

Dans une réalisation, les moyens pour assurer la fonction « ISR » comprennent un élément apte à obturer un orifice « ISR » mettant en communication la chambre intermédiaire et la chambre supérieure.

Dans une réalisation, l'élément apte à obturer l'orifice « ISR » est un disque soumis à l'action de son poids propre ou un disque sollicité vers la fermeture de l'orifice par des moyens de rappel élastique tels qu'un ressort.

Dans une réalisation, les moyens pour assurer la fonction « by-pass » comprennent un orifice « by-pass » apte à mettre en communication la chambre supérieure et la chambre intermédiaire, l'orifice étant obturable par un élément d'obturation tel qu'une bille.

Dans une réalisation, l'élément d'obturation est maintenu en position normale dans sa position de fermeture grâce à l'action de moyens de rappel élastique tels qu'un ressort disposé au sein d'une cheminée communiquant avec l'orifice « by-pass ».

Dans une réalisation, une extrémité de la cheminée est ouverte et met en communication le conduit avec l'atmosphère extérieure, par l'intermédiaire de la chambre supérieure.

Dans une réalisation, le clapet comporte un conduit unique au sein duquel sont disposés les moyens by-pass et les moyens OPR, ledit conduit comportant deux éléments d'obturation, tels que des billes, sollicités par un ressort.

L'invention sera mieux comprise à la lecture de la description qui va suivre, donnée uniquement à titre d'exemple et faite en se référant aux dessins dans lesquels :
- les figures 1, 2A, 2B et 2C montrent un premier exemple de réalisation d'un clapet conforme à l'invention ;
- les figures 3 et 4 montrent un deuxième exemple de réalisation d'un clapet conforme à l'invention ;
- la figure 5 montre un troisième exemple de réalisation d'un clapet conforme à l'invention ;
- la figure 6 montre un quatrième exemple de réalisation d'un clapet conforme à l'invention.

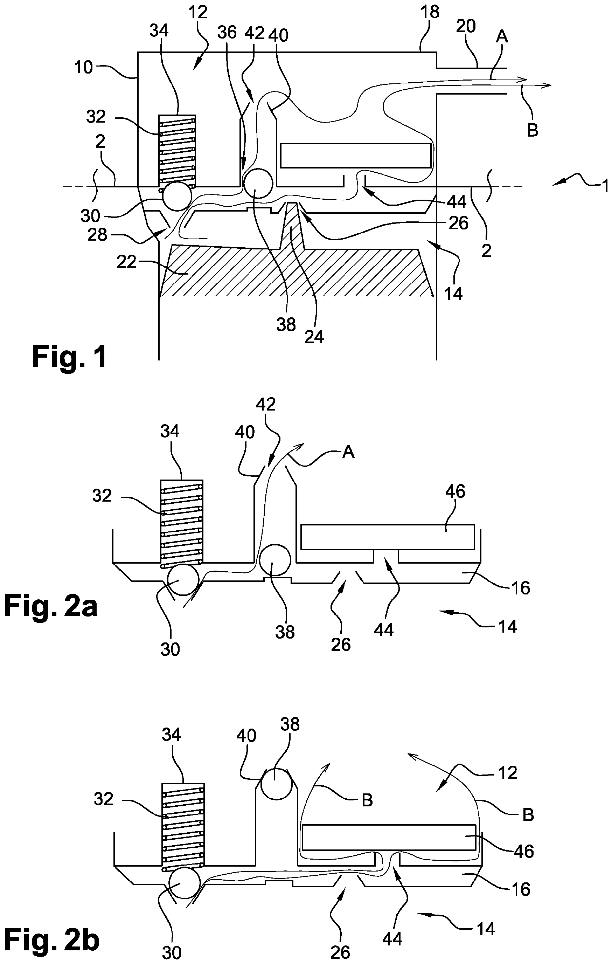

La figure 1 montre un exemple de réalisation d'un clapet 1 conforme à l'invention. Le clapet 1 comporte une enceinte 10 comportant une chambre supérieure 12, une chambre inférieure 14 et une chambre intermédiaire 16 séparant la chambre inférieure 14 et la chambre supérieure 12.

Lorsque le clapet 1 est positionné sur un réservoir, au niveau d'une paroi supérieure 2 du réservoir (partiellement représentée sur la figure 1), le clapet 1 se trouve partiellement en dehors du réservoir, une partie du clapet étant alors positionnée dans le réservoir, sous la paroi supérieure 2. Alternativement, le clapet 1 pourrait être intégré entièrement au sein du réservoir, et raccordé à un conduit débouchant à l'extérieur du réservoir et menant à l'atmosphère, éventuellement par l'intermédiaire d'un canister. Dans une autre variante, le clapet est positionné à un autre endroit de la ligne de ventilation, par exemple intégré au canister ou le long de la tubulure de remplissage du réservoir.

Dans une partie supérieure 18 de l'enceinte 10, le clapet 1 est pourvu d'un conduit 20 mettant en communication la chambre supérieure 12 et l'atmosphère extérieure, éventuellement par l'intermédiaire d'un canister (non représenté).

La chambre inférieure 14 est pourvue d'un flotteur 22, pourvu d'un pointeau 24 apte à venir obturer un premier orifice, ou orifice « ROV » 26 mettant en communication la chambre inférieure 14 et la chambre intermédiaire 16. Lorsque l'orifice « ROV » est fermé, tout passage de gaz ou de liquide entre la chambre inférieure 14 et la chambre supérieure 16 est interdit. Comme la chambre inférieure 14 est en communication avec l'intérieur du réservoir, le flotteur est apte à obturer l'orifice 26 par l'intermédiaire du pointeau 24 lorsque le niveau de carburant devient suffisamment élevé dans le réservoir, empêchant ainsi la sortie des gaz. Afin d'assurer la fonction « ROV », une bille dense (non représentée) reposant dans un puits ajouré (non représenté) est disposé sous le flotteur. Cette bille a pour fonction d'entrainer le flotteur 22 vers le haut lorsque le réservoir amorce un mouvement de retournement, au-delà d'une valeur d'angle de rotation prédéterminée, par exemple 80 degrés.

Un deuxième orifice, ou orifice « OPR » 28 est disposé entre la chambre inférieure 14 et la chambre intermédiaire 16. Cet orifice est normalement fermé par une bille 30 sollicité vers la fermeture de l'orifice « OPR » 28 par des moyens élastiques tels qu'un ressort 32. La bille 30 et le ressort 32 sont disposés dans un logement 34. L'ensemble formé par l'orifice « OPR » 28, et les moyens de fermeture de cet orifice qui comprennent la bille 30 et le ressort 32 permettent d'assurer une fonction « OPR », c'est-à-dire permettre l'échappement de gaz vers l'atmosphère extérieure en cas de surpression excédant un seuil prédéterminé. Les éléments tels que le ressort 32, la bille 30 (ou encore le siège sur lequel repose la bille 30) seront déterminés et dimensionnés de sorte que l'orifice « OPR » sera libéré si la pression dans le réservoir atteint ou dépasse le seuil de pression prédéterminé. En particulier, cette fonction assurera la sécurité voulue pour le réservoir à carburant dans le cas où l'orifice « ROV » 26 serait maintenu obstrué par le flotteur 22 durant un laps de temps important (par exemple dans le cas d'un blocage du flotteur en position haute, que ce blocage soit consécutif à un retournement du réservoir ou non), empêchant ainsi l'évacuation normale des gaz via l'orifice « ROV » 26.

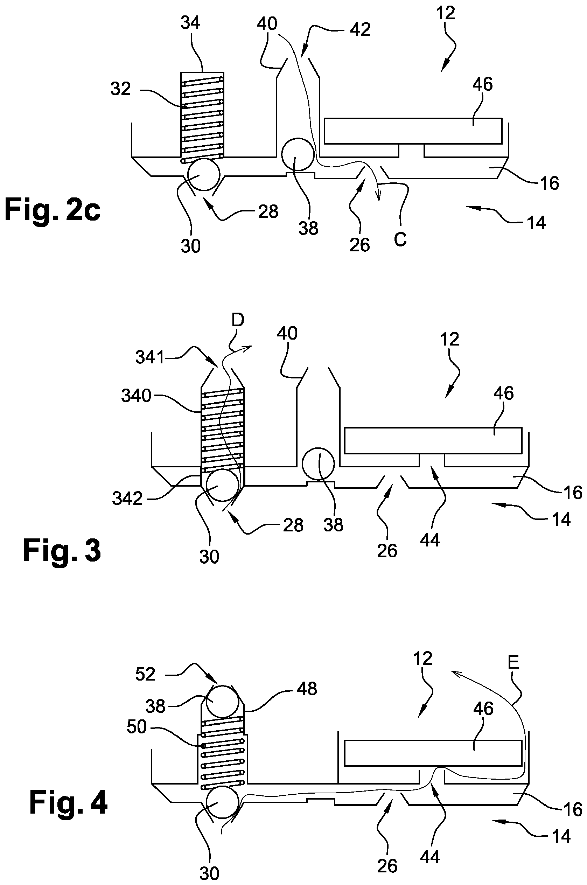

Dans l'exemple des figures 1, 2A, 2B et 2C, le ressort 32 est disposé dans un logement 34 fermé à son extrémité supérieure. En cas d'ouverture de l'orifice « OPR » 28, les gaz s'échappant du réservoir pénètrent dans la chambre intermédiaire 16 pour être évacués vers la chambre supérieure 12, puis vers l'atmosphère extérieure (notamment via le canister).

Afin de permettre au gaz provenant de la chambre intermédiaire 16 de transiter vers la chambre supérieure, sont prévus deux orifices.

Le premier de ces deux orifices, ou orifice « by-pass » 36, a pour fonction première de permettre le passage d'air vers le réservoir, lorsque la pression régnant dans le réservoir est inférieure à la pression atmosphérique (notamment en cas de consommation de carburant lors du fonctionnement du véhicule). Dans l'exemple de la figure 1 et des figures 2A à 2C, cet orifice 36 est normalement ouvert mais peut être obturé par une bille 38 disposé dans une cheminée 40 dont l'extrémité supérieure 42 est ouverte et communique avec la chambre supérieure 12. Ainsi qu'évoqué plus haut, l'orifice « by-pass » permet, lorsque l'orifice « ROV » n'est pas obturé, l'introduction d'air dans le réservoir afin de compenser toute dépression survenant au sein du réservoir, notamment lorsque du carburant est consommé, comme montré sur la figure 2C sur laquelle l'entrée d'air dans le réservoir est représentée par la flèche C. En outre, comme décrit ci-dessous, l'orifice « by-pass » permet dans certains cas, l'échappement de gaz de la chambre intermédiaire vers la chambre supérieure.

Comme représenté sur la figure 1, lorsque l'orifice « ROV » 26 est obturé par le pointeau 24 du flotteur 22, la pression dans le réservoir est susceptible d'augmenter jusqu'à atteindre voire dépasser le seuil de pression prédéterminé. Dans ce cas, comme évoqué plus haut, l'orifice « OPR » 28 est libéré et les gaz peuvent s'échapper vers la chambre supérieure via la cheminée 40 et l'orifice « by-pass » 42, et peuvent ainsi être évacués vers l'atmosphère extérieure via le conduit 20, comme le montre la flèche A.

Le deuxième orifice permettant l'évacuation des gaz est l'orifice « ISR » 44, mettant en communication la chambre intermédiaire 16 et la chambre supérieure 12, et apte à être obturé par un élément sollicité vers la fermeture de l'orifice « ISR » 44 sous l'action de son propre poids. Dans l'exemple des figures 1, 2A et 2B, cet élément est un disque pesant, ou disque « ISR » 46, en position normalement fermée. La libération de l'orifice « ISR » 44 est obtenue lorsque la pression régnant dans la chambre intermédiaire fait que les gaz tendent à soulever le disque « ISR » 46, permettant ainsi l'évacuation des gaz, comme schématisé par la flèche B.

Avantageusement, les dispositifs assurant les fonctions « by-pass » et « ISR » seront conçus et dimensionnés pour coordonner l'ouverture des orifices « by-pass » et « ISR. ». Ainsi, on peut par exemple envisager que l'orifice « by-pass », qui est dans l'exemple normalement ouvert, permette (toujours dans le cas où l'orifice « OPR » est ouvert) l'évacuation des gaz jusqu'à un différentiel de pression entre l'intérieur du réservoir et l'atmosphère extérieure prédéterminé, puis, qu'au-delà de ce seuil, l'orifice «by-pass » étant fermé par la remontée de la bille 38 dans la cheminée 40, la pression des gaz et le débit en résultant permette de soulever le disque « ISR » 46. Dans un tel cas, l'évacuation des gaz ne se fait pas simultanément selon les trajets correspondants respectivement aux flèches A et B, mais séquentiellement en cas de montée en pression à l'intérieur du réservoir (initialement selon la flèche A puis par la flèche B uniquement) comme visible sur les figures 2A et 2B, ou éventuellement : en premier selon la flèche A, ensuite selon les flèches A et B simultanément et enfin selon la flèche B uniquement.

La figure 3 montre un exemple de réalisation dans lequel le logement 340 surmontant l'orifice « OPR » 28 est pourvue d'une ouverture 341 au niveau de son extrémité supérieure permettant l'évacuation des gaz provenant du réservoir lorsque la pression au sein du réservoir aboutit à la libération de l'orifice « OPR » 28. En outre la cheminée 340 est prolongée par une portion inférieure 342 jusqu'au niveau de la paroi séparant les chambres inférieure 14 et intermédiaire 16. Ainsi le logement 340 est isolé de la chambre intermédiaire 16 et, lorsque l'orifice 28 est libre, les gaz sont évacués directement de la chambre inférieure vers la chambre supérieure 12, comme représenté par la flèche D. La fonction « OPR » est dans cet exemple totalement indépendante des fonctions « by-pass » et « ISR », qui sont assurées quant à elles de la manière expliquée plus haut. En d'autres termes, la fonction « OPR » court-circuite les fonctions « by-pass » et « ISR ».

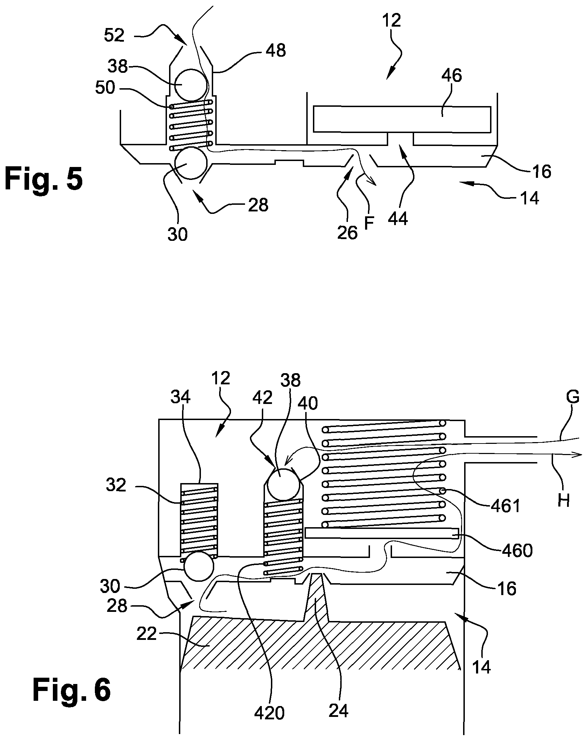

Les figures 4 et 5 représentent un exemple de réalisation dans lequel les fonctions « OPR » et « by-pass » sont réunies au sein d'une cheminée 48 unique. Cette cheminée est disposée au-dessus de l'orifice 28. La bille 30 assure la fermeture de l'orifice « OPR » 28 et est sollicitée par l'extrémité inférieure d'un ressort 50 disposé dans la cheminée 48. Ce ressort sollicite en outre, par l'intermédiaire de sa partie supérieure, la bille 38 assurant la fermeture de l'orifice supérieur 52 de la cheminée 48. L'orifice 52 est normalement fermé, sous l'action du ressort 50. En cas de dépression dans le réservoir, la force de rappel du ressort 50 sur la bille 38 permet à cette bille de libérer l'orifice 52 et ainsi laisser entrer de l'air dans le réservoir, comme représenté par la flèche F sur la figure 5.

Dans l'exemple des figures 4 et 5, la fonction « OPR » est assurée comme décrit plus haut, grâce à l'action combinée du ressort 50 et de la bille 30. Lorsque l'orifice 28 et libéré sous l'action des gaz, ceux-ci sont dans l'exemple évacués via l'orifice « ISR » 44, comme représenté par la flèche E sur la figure 4. En effet, lorsque l'orifice « OPR » est ouvert, l'orifice « by-pass » est nécessairement fermé (et inversement), le gaz s'échappent au travers de l'orifice « OPR » ne peuvent donc être évacués qu'au moyen de l'orifice « ISR ».

La figure 6 représente un exemple de réalisation du clapet 1, dans lequel l'orifice « by-pass » 36 est normalement fermé et dans lequel le disque « ISR » 460 est sollicité par un ressort de rappel 461. Le fonctionnement du disque « ISR » est analogue à celui exposé plus haut, à la différence que le disque 460 est sollicité vers la fermeture de l'orifice « ISR » par un ressort de rappel 461 disposé dans la chambre supérieure 12, et non plus par son seul poids. Le disque 460 n'est donc dans cet exemple pas un élément pesant. Par ailleurs, l'orifice « by-pass » est dans l'exemple normalement fermé, grâce à un ressort 420, disposé dans la cheminée 40, le ressort 420 sollicitant la bille 38 vers la fermeture de l'orifice 42 situé en partie supérieure de la cheminée 40.

L'invention objet de la présente demande permet d'obtenir un système de ventilation compact, intégrant un nombre de fonctions important. Ainsi, grâce à l'invention, l'implémentation du système de ventilation sur un réservoir se limite au montage d'un clapet conforme à l'invention, soit un élément unique, intégré, et facile à monter. Le clapet conforme à l'invention intègre la quasi-totalité des fonctions que doit assurer le système de ventilation d'un réservoir, en particulier d'un réservoir à carburant pour véhicule automobile. L'invention permet ainsi d'obtenir une réduction des coûts de fabrication et d'assemblage et également de diminuer les risques d'erreur de montage.

## Revendications

1. Clapet de mise à l'air (1) pour réservoir à liquide comportant une enceinte (10) dans laquelle sont intégrés :
- des moyens (22, 24, 26) pour assurer une fonction de fermeture automatique du clapet en cas de retournement du réservoir, ci-après désignée fonction « ROV » ;
- des moyens (44, 46) pour assurer une fonction d'interdiction du remplissage du réservoir au-delà d'un niveau prédéterminé, ci-après désignée fonction « ISR » ;
- des moyens (28, 30, 32) pour permettre de libérer la pression dans le réservoir vers l'atmosphère extérieure en cas de surpression excédant un seuil prédéterminé, ci-après désignée fonction « OPR » ;
- des moyens (36, 38, 40, 42) pour autoriser l'entrée d'air dans le réservoir lorsque la pression régnant au sein du réservoir est inférieure à la pression atmosphérique, ci-après désignée fonction « by-pass », **caractérisé en ce que** ladite fonction « OPR » étant apte à fonctionner lorsque la fonction « ROV » ferme le clapet (1).

2. Clapet selon la revendication 1, dans lequel l'enceinte (10) comprend une chambre supérieure (12) communiquant avec l'atmosphère extérieure, une chambre inférieure (14) communiquant avec l'intérieur du réservoir et une chambre intermédiaire (16) séparant la chambre supérieure (12) et la chambre inférieure (14).

3. Clapet selon l'une des revendication précédentes, dans lequel les moyens pour assurer la fonction « OPR » comprennent un orifice « OPR » (28), normalement obturé par un élément d'obturation tel qu'une bille (30), l'élément de fermeture étant soumis à l'action de moyens élastiques tel qu'un ressort (32).

4. Clapet selon la revendication précédente dépendante de la revendication 2, dans lequel l'orifice « OPR » met en communication la chambre inférieure (14) et la chambre supérieure (12).

5. Clapet selon la revendication 3 dépendante de la revendication 2, dans lequel l'orifice « OPR » met en communication la chambre inférieure (14) et la chambre intermédiaire (16).

6. Clapet selon l'une des revendications précédentes, dans lequel les moyens pour assurer la fonction « ROV » comprennent un flotteur (22) apte à obturer un orifice « ROV » 26 mettant en communication la chambre inférieure (14) et la chambre intermédiaire (16).

7. Clapet selon l'une des revendications précédentes dépendante de la revendication 2, dans lequel les moyens pour assurer la fonction « ISR » comprennent un élément (46 ; 460) apte à obturer un orifice « ISR » (44) mettant en communication la chambre intermédiaire (16) et la chambre supérieure (12).

8. Clapet selon la revendication précédente, dans lequel l'élément apte à obturer l'orifice « ISR » (44) est un disque (46) soumis à l'action de son poids propre ou un disque (460) sollicité vers la fermeture de l'orifice « ISR » (44) par des moyens de rappel élastique tels qu'un ressort (461).

9. Clapet selon l'une des revendications précédentes dépendante de la revendication 2, dans lequel les moyens pour assurer la fonction « by-pass » comprennent un orifice « by-pass » (36) apte à mettre en communication la chambre supérieure (12) et la chambre intermédiaire (16), l'orifice étant obturable par un élément d'obturation (38) tel qu'une bille.

10. Clapet selon la revendication précédente, dans laquelle l'élément d'obturation (38) est maintenu en position normale dans sa position de fermeture grâce à l'action de moyens de rappel élastique tels qu'un ressort disposé au sein d'une cheminée (40) communiquant avec l'orifice « by-pass ».

11. Clapet selon la revendication 10, dans laquelle une extrémité (42) de la cheminée (40) est ouverte et met en communication le conduit avec l'atmosphère extérieure, par l'intermédiaire de la chambre supérieure (12).

12. Clapet selon l'une des revendications 10 ou 11 en combinaison avec la revendication 3, comportant un conduit (48) unique au sein duquel sont disposés les moyens by-pass et les moyens OPR, ledit conduit comportant deux éléments d'obturation (30, 38) tels que des billes, sollicités par un ressort (50).

## Patentansprüche

1. Entlüftungsventil (1) für einen Flüssigkeitsbehälter, der ein Gehäuse (10) umfasst, in dem Folgendes integriert ist:
- Mittel (22, 24, 26) zum Gewährleisten einer automatischen Schließfunktion des Ventils im Falle einer Umkehr des Behälters, nachfolgend als "ROV"-Funktion bezeichnet;
- Mittel (44, 46) zum Gewährleisten einer Funktion des Verhinderns des Auffüllens des Behälters über einen vorbestimmten Stand hinaus, nachfolgend als "ISR"-Funktion bezeichnet;
- Mittel (28, 30, 32) zum Zulassen des Ablassens des Drucks in dem Behälter in die Außenatmosphäre, falls der Druck eine vorbestimmte Schwelle übersteigt, nachfolgend als "OPR"-Funktion bezeichnet;
- Mittel (36, 38, 40, 42) zum Einlassen von Luft in den Behälter, wenn der Druck im Innern des Behälters niedriger ist als der atmosphärische Druck, nachfolgend als "Bypass"-Funktion bezeichnet,
**dadurch gekennzeichnet, dass**
die "OPR"-Funktion funktionieren kann, wenn die "ROV"-Funktion das Ventil (1) schließt.

2. Ventil nach Anspruch 1, bei dem das Gehäuse (10) eine obere Kammer (12), die mit der Außenatmosphäre in Verbindung ist, eine untere Kammer (14), die mit dem Innern des Behälters in Verbindung ist, und eine Zwischenkammer (16) umfasst, die die obere Kammer (12) und die untere Kammer (14) trennt.

3. Ventil nach einem der vorherigen Ansprüche, bei dem die Mittel zum Gewährleisten der "OPR"-Funktion eine "OPR"-Öffnung (28) umfassen, die gewöhnlich durch ein Verschlusselement wie eine Kugel (30) verschlossen wird, wobei das Schließelement der Wirkung von elastischen Mitteln wie einer Feder (32) unterliegt.

4. Ventil nach dem vorherigen Anspruch in Abhängigkeit von Anspruch 2, bei dem die "OPR"-Öffnung die untere Kammer (14) und die obere Kammer (12) miteinander in Verbindung bringt.

5. Ventil nach Anspruch 3 in Abhängigkeit von Anspruch 2, bei dem die "OPR"-Öffnung die untere Kammer (14) und die Zwischenkammer (16) miteinander in Verbindung bringt.

6. Ventil nach einem der vorherigen Ansprüche, bei dem die Mittel zum Gewährleisten der "ROV"-Funktion einen Schwimmer (22) umfassen, der eine "ROV"-Öffnung 26 verschließen kann, die die untere Kammer (14) und die Zwischenkammer (16) miteinander in Verbindung bringt.

7. Ventil nach einem der vorherigen Ansprüche in Abhängigkeit von Anspruch 2, wobei die Mittel zum Gewährleisten der "ISR"-Funktion ein Element (46; 460) umfassen, das eine "ISR"-Öffnung (44) verschließen kann, die die Zwischenkammer (16) und die obere Kammer (12) miteinander in Verbindung bringt.

8. Ventil nach dem vorherigen Anspruch, wobei das Element, das die "ISR"-Öffnung (44) verschließen kann, eine Scheibe (46) ist, die der Wirkung ihres eigenen Gewichts unterliegt, oder eine Scheibe (460), die durch elastische Rückstellmittel wie eine Feder (461) in Richtung Schließen der "ISR"-Öffnung (44) vorgespannt wird.

9. Ventil nach einem der vorherigen Ansprüche in Abhängigkeit von Anspruch 2, wobei die Mittel zum Gewährleisten der "Bypass"-Funktion eine "Bypass"-Öffnung (36) umfassen, die die obere Kammer (12) und die Zwischenkammer (16) miteinander in Verbindung bringen kann, und wobei die Öffnung durch ein Verschlusselement (38) wie eine Kugel verschließbar ist.

10. Ventil nach dem vorherigen Anspruch, wobei das Verschlusselement (38) in der Normalposition dank der Wirkung von elastischen Rückstellmitteln wie einer Feder, die im Innern eines mit der "Bypass"-Öffnung in Verbindung stehenden Abzugs (40) angeordnet ist, in seiner Schließposition gehalten wird.

11. Ventil nach Anspruch 10, bei dem ein Ende (42) des Abzugs (40) offen ist und das Rohr über die obere Kammer (12) mit der Außenatmosphäre in Verbindung bringt.

12. Ventil nach Anspruch 10 oder 11 in Kombination mit Anspruch 3, umfassend ein einziges Rohr (48), in dem die Bypass-Mittel und die OPR-Mittel angeordnet sind, wobei das Rohr zwei Verschlusselemente (30, 38) wie Kugeln umfasst, die durch eine Feder (50) vorgespannt werden.

## Claims

1. Vent valve (1) for a liquid tank comprising an enclosed space (10) incorporating:
- means (22, 24, 26) for performing a function of automatically closing the valve if the tank rolls over, hereinafter referred to as the "ROV" function;
- means (44, 46) for performing a function of preventing the tank from being filled beyond a predetermined level, hereinafter referred to as the "ISR" function;
- means (28, 30, 32) for allowing the release of pressure in the tank to the external atmosphere in the event of an overpressure exceeding a predetermined threshold, hereinafter referred to as the "OPR" function;
- means (36, 38, 40, 42) for allowing air to enter the tank when the pressure obtaining in the tank is below atmospheric pressure, hereinafter referred to as the "bypass" function.
**characterized in that** the said "OPR" function being able to operate when the "ROV" function closes the valve (1).

2. Valve according to Claim 1, in which the enclosed space (10) comprises an upper chamber (12) communicating with the external atmosphere, a lower chamber (14) communicating with the inside of the tank and an intermediate chamber (16) separating the upper chamber (12) and the lower chamber (14).

3. Valve according to one of the preceding claims, in which the means for performing the "OPR" function comprise an "OPR" orifice (28), normally closed by a shutoff element such as a ball (30), the closure element being subjected to the action of elastic means such as a spring (32).

4. Valve according to the preceding claim depending on Claim 2, in which the "OPR" orifice places the lower chamber (14) and the upper chamber (12) in communication.

5. Valve according to Claim 3 depending on Claim 2, in which the "OPR" orifice places the lower chamber (14) and the intermediate chamber (16) in communication.

6. Valve according to one of the preceding claims, in which the means for performing the "ROV" function comprise a float (22) able to shut off an "ROV" orifice (26) placing the lower chamber (14) and the intermediate chamber (16) in communication.

7. Valve according to one of the preceding claims depending on Claim 2, in which the means for performing the "ISR" function comprise an element (46; 460) able to shut off an "ISR" orifice (44) placing the intermediate chamber (16) and the upper chamber (12) in communication.

8. Valve according to the preceding claim, in which the element able to shut off the "ISR" orifice (44) is a disk (46) subjected to the action of its own weight or a disk (460) urged toward the closing of the "ISR" orifice (44) by elastic return means such as a spring (461) .

9. Valve according to one of the preceding claims depending on Claim 2, in which the means for performing the "bypass" function comprise a "bypass" orifice (36) able to place the upper chamber (12) and the intermediate chamber (16) in communication, the orifice being able to be shut off by a shutoff element (38) such as a ball.

10. Valve according to the preceding claim, in which the shutoff element (38) is kept in the normal position in its position of closure by virtue of the action of elastic return means such as a spring arranged inside a vent (40) communicating with the "bypass" orifice.

11. Valve according to Claim 10, in which one end (42) of the vent (40) is open and places the pipe in communication with the external atmosphere, via the upper chamber (12).

12. Valve according to one of Claims 10 and 11 in combination with Claim 3, comprising a single pipe (48) within which the bypass means and the OPR means are arranged, said pipe comprising two shutoff elements (30, 38) such as balls urged by a spring (50).
